# EUROPEAN PATENT SPECIFICATION

(11) **EP 2 412 618 B1**
(45) Date of publication and mention of the grant of the patent: **28.01.2015**
(21) Application number: 11169957.5
(22) Date of filing: 15.06.2011
(51) Int. Cl.: B62J 1/02

(54) **Shock-absorbing saddle**
Stoßdämpfender Sattel
Selle absorbant les chocs

(30) Priority: 28.07.2010 IT TV20100107
(43) Date of publication of application: 01.02.2012
(73) Proprietor: Selle San Marco di Girardi Comm. Luigi S.P.A., 36028 Rossano Veneto (VI) (IT)
(72) Inventor: Girardi, Luca Emanuele, 36028 Rossano Veneto (VI) (IT)
(74) Representative: Morabito, Sara

(56) References cited:
- EP-A1- 0 432 106
- EP-A1- 1 078 846
- DE-U1- 20 305 512
- JP-A- 8 253 180
- US-A1- 2004 145 222
- US-A1- 2006 006 706

## Description

The present application relates to a shock-absorbing saddle for bicycles.

Nowadays it is known to make shock-absorbing saddles for use on bicycles. In this regard Italian patent no. 1,258,588 is known, which discloses a shock-absorbing elastic support, particularly for saddles of bicycles, the distinctive characteristic of which consists in that it comprises an elongated body in elastomeric material provided with end portions that are suitably shaped and molded so as to be compressible in a preferential direction which coincides with its longitudinal axis.

In particular the shock-absorbing elastic support consists of a main body in elastic material with tapered end portions respectively coupled to the shell of a saddle and, via the use of a metal seat, to a fork coupled to the saddle post of a bicycle.

The main body, constituting the shock-absorbing elastic support, has an elongated shape with a longitudinal axis of symmetry that coincides with the preferential direction of compressibility of the body itself, the body having an axial through cavity that connects the two ends and which is adapted to slidingly accommodate a rod-like element made integral with the shell of the saddle.

A locking screw with a wide head is rotatably associated in the axial through cavity.

This known solution suffers many drawbacks, however: as structured and as recited in the text, the shock-absorbing elastic support can perform shifts that are not only along the axis of the axial cavity, but also according to different angles: this involves possible dislocation from the metal seats or from the shell of the saddle and deformations of the shock-absorbing elastic support which can lead to its breakage or to its permanent deformation.

Furthermore, if the user imposes, on the shock-absorbing elastic support, a weight component which has a different direction to that of the handlebars, then in addition to a deformation of the main body, the screw could also accidentally strike the edge of the metal seats as well, causing a decrease in the shock-absorption and injury to the user because it reaches the end of the stroke before intended.

This solution, moreover, presents a complexity in the adjustment of the positioning of the screw, since it is necessary to previously unscrew the metal seats from the fork, deform the fork itself in order to then be able to access the screw with the point of the screwdriver and adjust it and, subsequently, screw the metal seats back on.

The screw, furthermore, is subjected during the use of the bicycle to possible loosenings which are due to the considerable stresses to which the main body is subjected, and this could possibly lead to a decrease, possibly significant, of the stroke of the shock-absorbing elastic support, thus defeating its function.

In any case the presence of the screw limits the compression of the main body, thus limiting the functionality of the shock-absorbing elastic support.

Also known is EP2051898 which discloses a shock-absorbing device for seating structures and a seating structure comprising the device which consists of a hollow main body, made of a first elastomeric material, which defines an elastically deformable compression chamber, a hollow secondary body, made of a second elastomeric material, which defines an elastically deformable expansion chamber, a fluid channel for connecting the expansion and compression chambers so as to obtain the transfer fluid from one to the other and vice versa, means for anchoring the main body and the secondary body to the seating structure for the associated device, the connection channel comprising valve means that are adapted to control the flow of fluid between the chambers in response to the elastic deformation thereof.

This solution however is complex construction-wise, requiring not only that a component be made of different materials with interposition of valve means, but also the insertion and sealing, at the pressure generated during the deformation, of the fluid present between the chambers.

In addition to the structural complexity, it is high cost, and the shock is absorbed according to an axis substantially perpendicular to the point of application of the force.

US 2004/145222 A1 discloses a shock-absorbing bicycle saddle which includes a saddle body, a top saddle frame transversely mounted in the bottom side of the rear part of the saddle body and which defines, with the bottom side of the saddle body, a buffer space. The saddle further comprises two elastic members bilaterally stopped below the top saddle frame, a bottom saddle frame provided at the bottom side of the elastic members, and a bracket having two shank portions each having a front end respectively fixedly fastened to the bottom side of the front part of the saddle body and a rear end respectively fastened to left and right ends of the bottom saddle frame.

US 2006/006706 A1 discloses a bicycle saddle which includes a saddle shell, a frame and two pneumatic cushions. The frame has a relatively narrower front end connected to a bottom side of the front end of the saddle shell, and a relatively wider rear end located below the rear end of the saddle shell. The pneumatic cushions are spacedly disposed between a bottom side of the rear end of the saddle shell and the rear end of the frame. The pneumatic cushions each have an enclosed chamber that is filled with gas.

EP 1078846 A1 discloses a method for manufacturing a suspension for bicycle saddles and a suspension obtained by means of this method. The suspension essentially consists of a spring, a substantially tubular part arranged so as to line externally the spring and fixing means for mounting the suspension between the shell and the support structure of the saddle.

DE 20305512 U1 discloses a bicycle saddle comprising a saddle body having a relatively narrower front portion and a relatively wider rear portion comprising two bilaterally upright supports on the underside of the rear portion of the saddle body. The supports comprise helical springs axially aligned, surrounded by rubber bushes which rest on end-plugs.

The aim of the present invention is therefore to solve the above mentioned technical problems, eliminating the drawbacks in the cited known art, by devising a saddle that makes it possible to optimally absorb the shocks of all the shifts to which a saddle of a bicycle is subjected during use, while being at the same time structurally and constructionally simple.

Within this aim, an object of the invention is to provide a saddle that has a great elasticity in the absence of rigid stroke limit elements.

Another object is to provide a saddle that makes it possible to perform the function of shock-absorption for a saddle as a function of all the directions that can be imposed upon it during the use of the bicycle, so as to increase the shock-absorbing characteristics.

Another object is to provide a saddle with the above characteristics that has low manufacturing costs and requires a short time for its assembly.

This aim and these objects, as well as others which will become better apparent hereinafter, are achieved by a shock-absorbing saddle according to claim 1.

Further characteristics and advantages of the invention will become better apparent from the detailed description of a particular, but not exclusive, embodiment, illustrated by way of non-limiting example in the accompanying drawings, wherein:

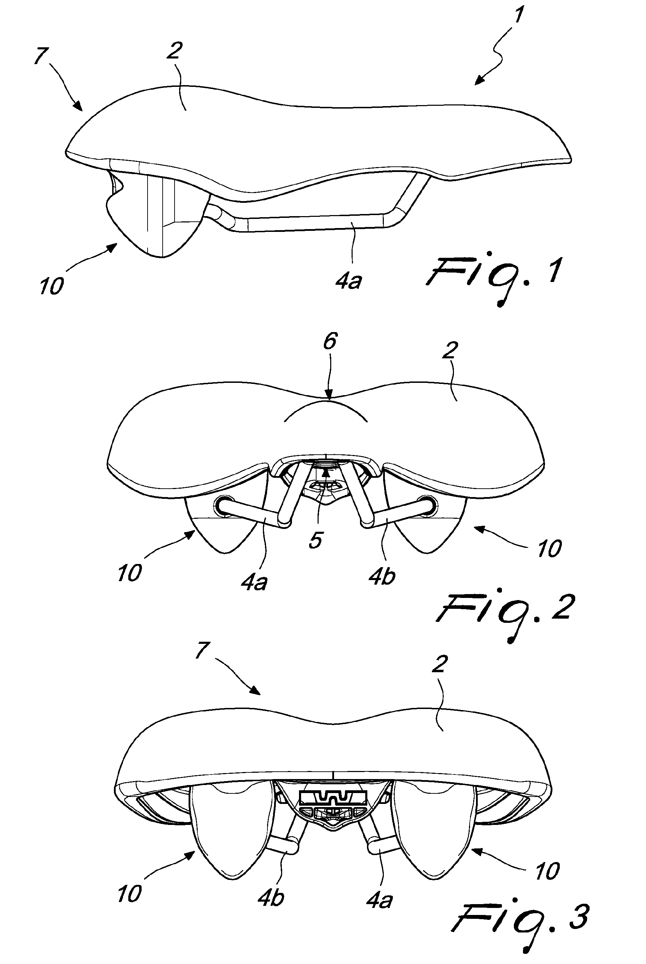

Figure 1 is a side view of a saddle according to the invention;
Figure 2 is a front view of the saddle according to the invention;
Figure 3 is a rear view of the saddle;

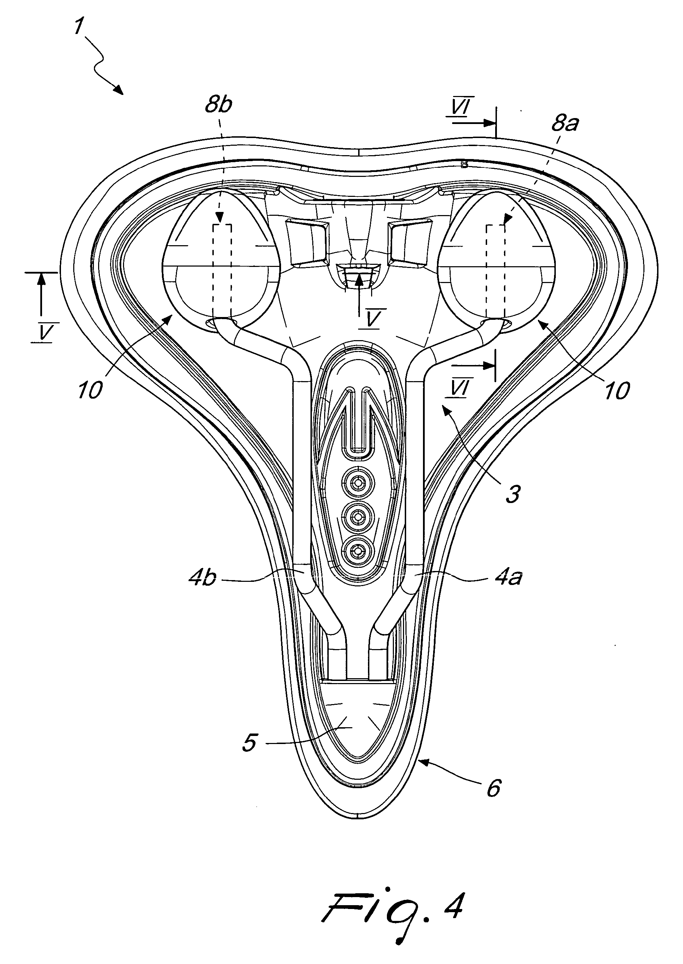

Figure 4 is a view from below of the saddle;

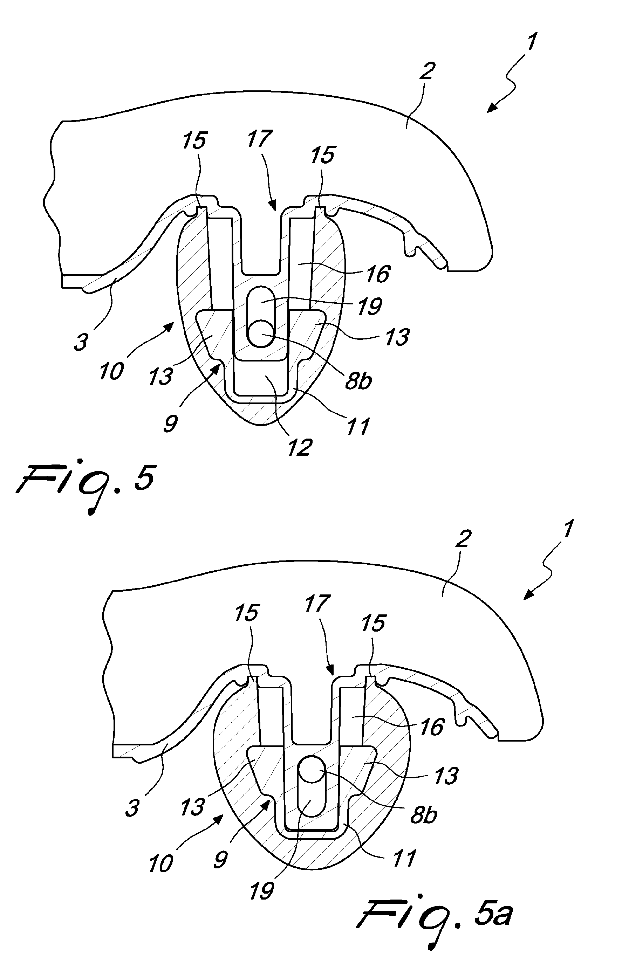

Figures 5 and 5a are cross-sectional views, taken along the line V-V of Figure 4, respectively of the conditions of non-use and of use of the shock-absorbing step;

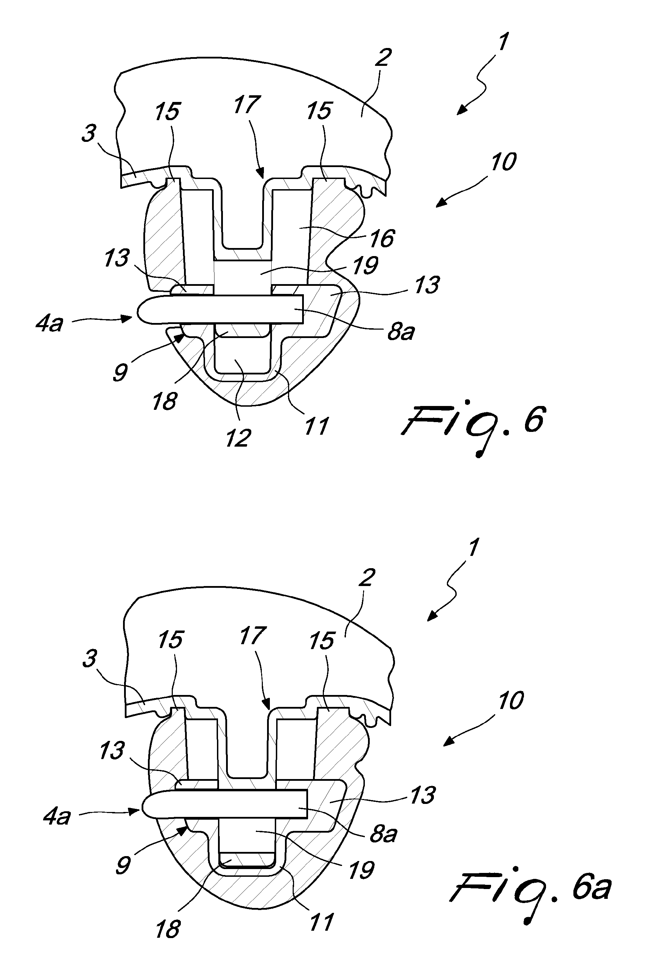

Figures 6 and 6a are cross-sectional views, taken along the line VI-VI of Figure 4, respectively of the conditions of non-activation and of activation of the shock-absorbing function;

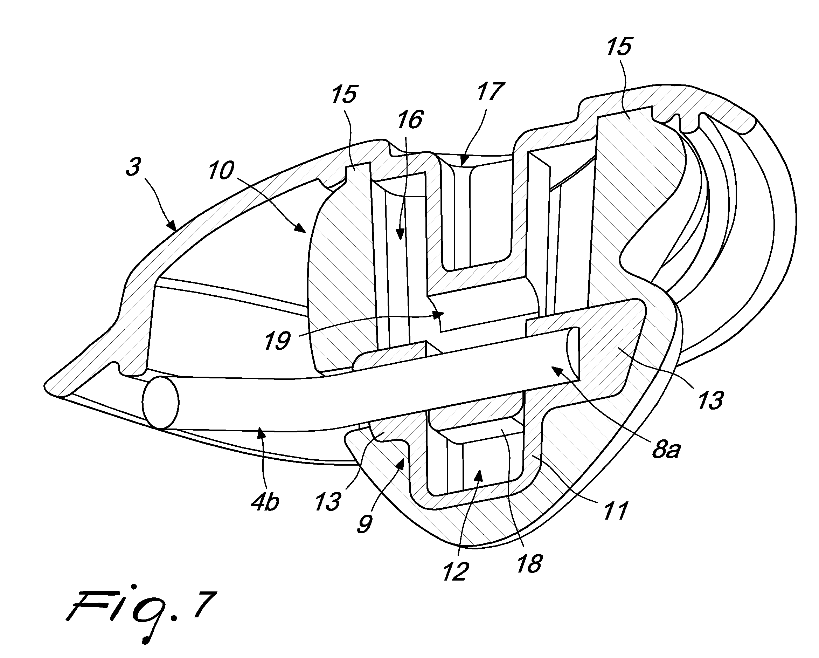

Figure 7 is a partially cross-sectional isometric view of the saddle.

In the embodiments that follow, individual characteristics shown in relation to specific examples may in reality be interchanged with other, different characteristics, existing in other embodiments.

With reference to the figures, the reference numeral 1 designates a shock-absorbing saddle, particularly for bicycles, comprising an upper padding 2 which is supported on a rigid shell 3, which is made of plastic material.

The saddle comprises a pair of arms 4a, 4b, which protrude from a protrusion 5 which is arranged in a lower region with respect to the rigid shell 3 at the region of the tip 6; each of the arms 4a, 4b extends substantially axially and toward the rear region 7 of the rigid shell 3.

The arms 4a, 4b are substantially mirror-symmetrical with respect to the longitudinal central axis of the saddle and are slightly divaricated so as to assume a substantially ox-horn-like shape, the free ends 8a, 8b of which can be arranged selectively at a first rigid appendage 9, which is embedded internally and in a lower region with respect to an elastically deformable body 10.

The first appendage 9 is, in cross-section, substantially shaped like an inverted dome, so as to define, in a transverse cross-section, a stem 11, which has a first axial seat 12, and a wing 13, which is perimetric with respect to the stem 11 and on which the free ends 8a, 8b are embedded, the free ends 8a, 8b thus having a portion 14 that is arranged in the first axial seat 12.

The elastically deformable body 10 is essentially shaped like an inverted ovoid and has an end face 15, which in an upper region is associated or jointly connected to the rigid shell 3.

At the end face 15 a second axial seat 16 is provided, which is extended substantially to the underlying pair of wings 13a, 13b.

A second appendage 17 protrudes inside the second axial seat 16, below the rigid shell 3, and partially floats within the first appendage 9.

The second appendage 17 has, in proximity to the free end 18 that can be arranged slidingly within the first axial seat 12, an axial groove 19, which is shaped, in cross-section, like a slot within which the end 8a or 8b of the pair of arms 4a, 4b is arranged.

Operation of the invention is the following: the stresses imposed by the ground on the wheels of the bicycle during use are transmitted to the arms 4a, 4b and from these, through the free ends 8a, 8b, to the first appendage 9 which compresses the elastically deformable body 10 without affecting the second appendage 17 thanks to the presence of the groove 19.

Similarly, the shifting of the body on the saddle causes the compression of the second appendage 17 which slides freely, to the stroke limit, within the first axial seat 12, thus compressing the elastically deformable body 10.

In practice it has been found that the invention fully achieves the above mentioned aim and objects, a saddle being obtained that makes it possible to optimally absorb all the shifts to which it is subjected during use, while being at the same time structurally and constructionally simple.

Lastly, the saddle has low manufacturing costs, requires a short time for its assembly and is easy to assemble.

Obviously the materials used as well as the dimensions constituting the individual components of the invention can be more relevant according to specific requirements.

The various different means for effecting certain different functions shall not in any way coexist only in the illustrated embodiment, but may be present per se in many embodiments, even if not illustrated.

The characteristics indicated as advantageous, advisable or similar may also be lacking or be substituted by equivalent characteristics.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A shock-absorbing saddle (1) for bicycles, comprising an upper padding (2) which is supported on a rigid shell (3), and a pair of arms (4a, 4b) which protrude in a lower region with respect to said rigid shell (3), approximately axially with respect to the longitudinal central axis of the saddle, and toward the rear region (7) of said rigid shell (3), each of the rear free ends (8a, 8b) of the pair of arms (4a, 4b) can be arranged at a first rigid appendage (9), which is embedded internally and in a lower region with respect to an elastically deformable body (10), which is associated, at its other end, with a second appendage (17), which is arranged so as to float within said first appendage (9) and is jointly connected to said rigid shell (3), said first appendage (9) is, in cross-section, substantially shaped like an inverted dome, so as to define, in a transverse cross-section, a stem (11), which has a first axial seat (12), and a wing (13), which is perimetric with respect to said stem (11) and on which the respective free end (8a, 8b) is embedded, said free end (8a, 8b) having a portion that is arranged in said first axial seat (12), said elastically deformable body (10) being essentially shaped like an inverted ovoid and having an end face (15) which in an upper region is associated with, or jointly connected to, said rigid shell (3), at said end face (15) a second axial seat (16) being provided, which is extended substantially to said wing (13), the second appendage (17) protruding inside said second axial seat (16), below said rigid shell (3), and being arranged so as to partially float within said first appendage (9), said second appendage (17) having, proximate to its free end (18) that can be arranged slidingly within said first axial seat (12), an axial groove (19), which is shaped, in cross-section, like a slot within which the respective free end (8a, 8b) is arranged.

2. The saddle according to claim 1, wherein said pair of arms (4a, 4b) protrudes from a protrusion (5) which is arranged in the lower region with respect to said rigid shell (3) at the region of the tip (6) of said saddle (1), each one of said arms (4a, 4b) being extended substantially axially with respect to the longitudinal central axis of the saddle and toward said rear region (7) of said rigid shell (3), said arms (4a, 4b) being substantially mirror-symmetrical with respect to the longitudinal central axis of said saddle and being slightly divaricated so as to assume a substantially ox-horn-like shape.

## Patentansprüche

1. Stoßdämpfender Sattel (1) für Fahrräder mit einem oberen Polster (2), das auf einer starren Schale (3) abgestützt ist, und mit einem Paar von Armen (4a, 4b), die in einem unteren Bereich bzgl. der starren Schale (3) ungefähr axial bzgl. der zentralen Längsachse des Sattels und zum hinteren Bereich (7) der starren Schale (3) hervor stehen, wobei jedes der hinteren freien Enden (8a, 8b) des Paares von Armen (4a, 4b) an einem ersten starren Fortsatz (9) angeordnet werden kann, der innerhalb und in einem unteren Bereich bzgl. eines elastisch verformbaren Körpers (10) eingelassen ist, der an seinem anderen Ende mit einem zweiten Fortsatz (17) verbunden ist, der angeordnet ist, um somit innerhalb des ersten Fortsatzes (9) zu schweben, und der zusammenwirkend mit der starren Schale (3) verbunden ist,
wobei der erste Fortsatz (9) im Wesentlichen wie ein umgekehrter Dom im Querschnitt geformt ist, um somit im diagonalen Querschnitt einen Vorbau (11) zu bilden, der einen ersten axialen Sitz (12) und einen Flügel (13) aufweist, der bzgl. des Vorbaus (11) perimetrisch ist, und auf dem das jeweilige freie Ende (8a, 8b) eingelassen ist, wobei das freie Ende (8a, 8b) einen Bereich aufweist, der im ersten axialen Sitz (12) angeordnet ist,
wobei der elastisch verformbare Körper (10) im Wesentlichen verkehrt eiförmig ausgebildet ist und eine Endfläche (15) aufweist, die in einem oberen Bereich mit der starren Schale (3) in Verbindung ist oder damit zusammenwirkend verbunden ist, wobei an der Endfläche (15) ein zweiter axialer Sitz (16) vorgesehen ist, der sich im Wesentlichen zum Flügel (13) erstreckt,
wobei der zweite Fortsatz (17) innerhalb des zweiten axialen Sitzes (16) unterhalb der starren Schale (3) hervorsteht und so angeordnet ist, um teilweise innerhalb des ersten Fortsatzes (9) zu schweben,
wobei der zweite Fortsatz (17) unmittelbar an seinem freien Ende (18), das gleitbeweglich innerhalb des ersten axialen Sitzes (12) angeordnet werden kann, eine axiale Nut (19) aufweist, die im Querschnitt wie ein Schlitz geformt ist, in dem das jeweilige freie Ende (8a, 8b) angeordnet ist.

2. Sattel gemäß Anspruch 1, wobei das Paar von Armen (4a, 4b) von einem Vorsprung (5) hervorsteht, der im unteren Bereich bzgl. der starren Schale (3) am oberen Bereich (6) des Sattels (1) angeordnet ist, wobei jeder der Arme (4a, 4b) im Wesentlichen axial bzgl. der zentralen Längsachse des Sattels und zum hinteren Bereich (7) der starren Schale (3) verlängert ist, wobei die Arme (4a, 4b) im Wesentlichen spiegelsymmetrisch bzgl. der zentralen Längsachse des Sattels und etwas gespreizt sind, um somit im Wesentlichen eine Rinderhornform anzunehmen.

## Revendications

1. Selle amortissant les chocs (1) pour bicyclettes, comprenant un rembourrage supérieur (2) qui est supporté sur une coque rigide (3) et une paire de bras (4a, 4b) qui fait saillie dans une région inférieure par rapport à ladite coque rigide (3), de manière approximativement axiale par rapport à l'axe central longitudinal de la selle, et vers la région arrière (7) de ladite coque rigide (3), chacune des extrémités libres arrière (8a, 8b) de la paire de bras (4a, 4b) peut être agencée au niveau d'un premier appendice rigide (9), qui est encastré intérieurement et dans une région inférieure par rapport à un corps élastiquement déformable (10), qui est associé, au niveau de son autre extrémité avec un second appendice (17), qui est agencé afin de flotter à l'intérieur dudit premier appendice (9) et est conjointement raccordé à ladite coque rigide (3), ledit premier appendice (9) est, en coupe, sensiblement en forme de dôme inversé, afin de définir, dans une section transversale, une tige (11) qui a un premier siège axial (12) et une aile (13) qui est périmétrale par rapport à ladite tige (11) et sur laquelle l'extrémité libre (8a, 8b) respective est encastrée, ladite extrémité libre (8a, 8b) ayant une partie qui est agencée dans ledit premier siège axial (12),
ledit corps élastiquement déformable (10) étant essentiellement en forme d'ovoïde inversé et ayant une face d'extrémité (15) qui, dans une région supérieure, est associée à, ou conjointement raccordée à ladite coque rigide (3), au niveau de ladite face d'extrémité (15), on trouve un second siège axial (16) qui est étendu sensiblement vers ladite aile (13),
le second appendice (17) faisant saillie à l'intérieur dudit second siège axial (16), au-dessous de ladite coque rigide (3), et étant agencé pour flotter partiellement à l'intérieur dudit premier appendice (9),
ledit second appendice (17) ayant, à proximité de son extrémité libre (18) qui peut être agencée de manière coulissante à l'intérieur dudit premier siège axial (12), une rainure axiale (19) qui est formée, en coupe, comme une fente à l'intérieur de laquelle l'extrémité libre (8a, 8b) respective est agencée.

2. Selle selon la revendication 1, dans laquelle ladite paire de bras (4a, 4b) fait saillie à partir d'une saillie (5) qui est agencée dans la région inférieure par rapport à ladite coque rigide (3) au niveau de la région de pointe (6) de ladite selle (1), chacun desdits bras (4a, 4b) étant étendu de manière sensiblement axiale par rapport à l'axe central longitudinal de la selle et vers ladite région arrière (7) de ladite coque rigide (3), lesdits bras (4a, 4b) étant sensiblement symétrique en miroir par rapport à l'axe central longitudinal de ladite selle et étant légèrement déviés afin de prendre sensiblement une forme de corne de boeuf.
